# EUROPEAN PATENT APPLICATION

(11) **EP 0 901 284 A2**
(43) Date of publication of application: **10.03.1999**
(21) Application number: 98116100.3
(22) Date of filing: 26.08.1998
(51) Int. Cl.: H04N 7/08

(54) **Internet linkage with broadcast TV**

(30) Priority: 05.09.1997 US 924236
(71) Applicant: AT&T Corp., New York, NY 10013-2412 (US)
(72) Inventor: Hicks, John Alson III, Ocean, New Jersey 07712 (US)
(74) Representative: Modiano, Guido, Dr.-Ing.

(57) **Abstract**

Signals corresponding to Uniform Resource Locators (URL's) are inserted directly into a broadcast television signal, advantageously in portion of the vertical blanking interval available for closed captioning information. When a television signal with the embedded URL is received in an Internet capable television, the presence of the URL is indicated to the viewer, such as by causing a small, transparent, overlay icon to be displayed on the TV screen. When a viewer thereafter actuates a special button on their wireless (infrared), or wired, remote control, the URL information contained in the television signal is extracted and sent to the portion of the television, or auxiliary device, used to establish an Internet connection. The viewer is then able to gain access to the Internet site having the address specified by the URL, which site will generally contain information associated with the television programming.

## Description

### Field of the Invention

This invention relates generally to systems which allow access to the Internet, and, in particular, to systems in which a user operates a specially configured television receiver that includes functionality similar to that available in a personal computer (PC), so that the television is capable of allowing access to the Internet, in order to browse or "visit" specific Internet sites that are of interest to the user.

### Background Of the Invention

In the U.S. in 1996, virtually 100% of households had TVs, which are turned "on" an average of 7 hours per day. However, only 37% of households had one or more PC's, which are, at the present time, the traditional hardware/software system with which to gain access to the Internet and the World Wide Web. Recognizing this, there has been a trend to bring PC-like functionality to televisions, in the form, for example, of Internet TV, whereby television users can access the Internet through their television.

Some of the arrangements in which PC-like functionality has been incorporated in television sets has not been overwhelmingly successful, however, because, in general, the majority of the TV-watching consumer population is not computer literate. One specific aspect of this relates to the selection of particular Internet sites that a user may wish to "visit". These sites are identified by addresses, which have a specific format known as Uniform Resource Locators (URL's), for example, "http:\\www.something.com". To visit a site, a user must "enter" the URL into the television/computer, so that the address may be communicated to the host computer that controls the Internet connection. Since a conventional TV does not have a keyboard, the entry process may be complicated, for example, using an on-screen keyboard, or manipulating a cursor by means of directional arrows on an infrared TV remote control device.

Another problem with existing arrangements is that it is difficult to convey to the user information about the URL related to specific products, services or other content that may be described in the television program. For example, if an automobile manufacturer is advertising several different car models, the manufacturer may, today, be able to include only a single URL indicating the address of the manufacturer's home page. However, the manufacturer would be unable, due to space and time limitations, to convey information indicating the URL's for the individual car models that are described in the advertising.

Accordingly, it is desirable to bringing PC-like functionality to the TV in such a way that a non-PC literate user can access the Internet in a simple and straightforward manner that conceals the complexity of the Internet from the user. Additionally it is desirable to allow a user, while watching a television program, to easily obtain and use URL's specifically associated with the television programming that the user is watching, and thereafter access the appropriate Internet sites indicated by those addresses.

### Summary

In accordance with the present invention, content producers insert signals corresponding to URL's directly into the broadcast television signal, advantageously in the portion of the TV signal vertical blanking interval available for closed captioning information. Different URL's can therefore be inserted in different portions of a single program or advertisement, so that a URL corresponds to the specific product, service or other item being described in the television program.

When the signal with the embedded URL is received in an Internet capable television arranged in accordance with the present invention, the presence of the URL is indicated to the viewer, such as by causing a small, transparent, overlay icon to be displayed on the TV screen. In accordance with an additional aspect of the present invention, additional functionality is provided in the Internet capable television, to enable detection of instances when the consumer pushes a special button on their wireless infrared, or wired, remote control at a time when the received television signal includes the embedded URL information. At such instances, the URL information contained in the television signal is extracted and sent to the portion of the television used to establish an Internet connection. Advantageously, the viewer is then able to gain access to the Internet site having the address specified by the URL, which site will generally contain information associated with the television programming.

By virtue of the present invention, a viewer can easily connect to a URL presented in a TV broadcast without having to remember or enter the URL via a keyboard device. By so doing, a dimension of interactivity is added to the TV-watching experience: a viewer seeing a program or advertisement on broadcast TV that includes the presentation of a URL, can, with the present invention, access the site addressed by that URL.

### Brief Description of the Drawing

The present invention will be more fully understood by reading the following detailed description in conjunction with the drawing, in which:
Fig. 1 is a diagram illustrating the process by which a URL is inserted in a broadcast television signal in accordance with the present invention;
Fig. 2 is a diagram illustrating the arrangement of an Internet capable television used in the present invention, including the video icon generator;
Fig. 3 is a process diagram illustrating the process in an Internet capable television equipped in accordance with the present invention; and
Fig 4 is a diagram illustrating more of the details of the components contained in an Internet capable television arranged in accordance with the present invention.

### Detailed Description

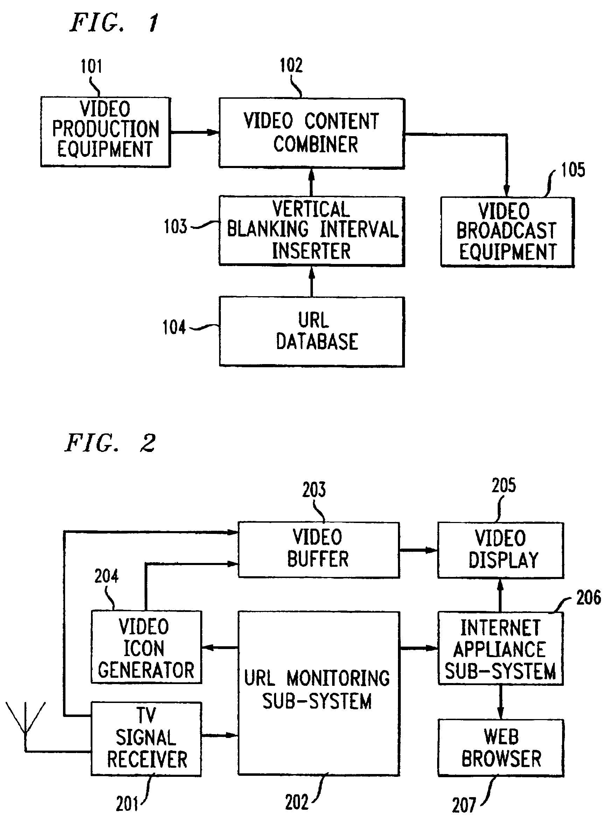

Referring first to Fig. 1, there is shown a diagram illustrating the process by which a URL is inserted in a broadcast television signal in accordance with the present invention. Video production equipment 101 is used to generate a video program signal, which represents a television program such as an advertisement depicting a series of automobiles manufactured by a particular auto maker. The signal generated by production equipment 101 is applied to one input of a video content combiner 102. The second input to combiner 102 is supplied by a vertical blanking interval inserter 103, which is arranged to insert information into the vertical blanking interval of the television signal. (Inserter 103 is described in more detail below.) The inserted information is advantageously, in accordance with the invention, a URL obtained from a URL database 104, such that the inserted URL corresponds to the programming that is then being processed.

As a first example, consider that the output of video production equipment 101 is a video signal depicting an automobile. Advantageously, URL database 104 is queried to output to inserter 103, a URL associated with a Web page sponsored by the manufacturer of that automobile. As a second example, the video signal may depict a piece of jewelry being sold on a home shopping channel, and the URL may correspond to a Website containing details of the jewelry, such as size, weight, price, delivery interval, and so on. Note that URL's could be inserted on the basis of a single URL for each advertisement or program, or on the basis that different URL's are inserted for different portions or frames of each advertisement or program.

The specific implementation details of inserter 103 will be well known to those skilled in the art, particularly in view of the fact that arrangements currently exist for inserting various types of information (other than URL's) into the vertical blanking interval of a television signal. Indeed, according to a publication available from the Engineering Institute of America, publication EIA-608 entitled "Recommendation for Line 21 Data Services" (September 1994), the closed caption vertical blanking interval (VBI) in a television signal, which occurs at line 21, field 2, includes a data channel #5 that is available for extended data services (XDS). This data channel may be used to transmit data packets which contain information which interacts with consumer hardware or other special devices on TVs and VCRs. Suggested uses of this data channel are to transmit one or more Extended Data Services packets in order to set a VCR's clock/calendar, create an index of contents on a videotape or tell a VCR when it's time to tape a program. EIA-608 also specifies the formats and protocols for Extended Data Services, and these formats can illustratively be used with the present invention. Further details are available from Caption Center at WGBH Educational Foundation, or by visiting the Website at www.boston.com/wgbh/pages/captioncenter/cctechfacts3.html.

While various arrangements can be used to implement inserter 103, it is important that the inserter used to embed URL's in the broadcast signal be simple and cheap to implement. It is also important that inserter operate in such a manner that the embedded URL's cannot be blocked or removed by broadcasters or CATV operators. In addition, it is desirable that the insertion mechanism work for both analog and digital TV formats.

Referring now to Fig. 2, there is shown a diagram illustrating the arrangement of an Internet capable television used in the present invention. The video signal transmitted from the video broadcast equipment 105 of Fig. 1 is received, either over the air or via cable or any other distribution arrangement, in a TV signal receiver 201, and applied both to a URL monitoring system 202 and to a video buffer 203. The purpose of URL monitoring system 202 is simply to determine if a URL has been embedded in the received signal. This may be accomplished by monitoring the contents of the vertical blanking interval, for example in the same manner as is currently used to monitor and extract close caption information transmitted in the vertical blanking interval. Other extraction techniques will be well known to persons skilled in the art, and will, of course, correspond to the specific techniques used to embed the URL in the television signal in the apparatus of Fig. 1.

When and if the presence of a URL is detected, a signal is applied from URL monitoring system 202 to a video icon generator 204. This signal causes an icon signal to be output from generator 204 and applied to a second input to buffer 203. The icon signal creates a visible icon on the screen of display 205 together with the television signal picture. The icon is illustratively a small image located in a corner of the picture being displayed, and signifies to a viewer that an embedded URL is then "available".

URL monitoring system 202 supplies the URL extracted from the received television signal to be applied to an Internet appliance sub-system 206 that includes an associated Web browser 207. The Internet appliance sub-system 206 is similar in concept to a Sony or Philips WebTV set-top Internet appliance, but integrated into the design of the TV. It can be considered to be a form of a diskless-PC which is equipped with Web browser software. When a television is equipped with an Internet appliance sub-system, it is called an "Internet capable television" in this patent application, since it is capable of establishing a connection to the Internet through a dial-up modem, or other form of communication interface, and supporting Web browsing. Note that sub-system 206 can be an integral part of a television set, e.g., positioned within the television chassis, or a separate unit, e.g., a set-top box that is separate from, but connected to, an ordinary television set.

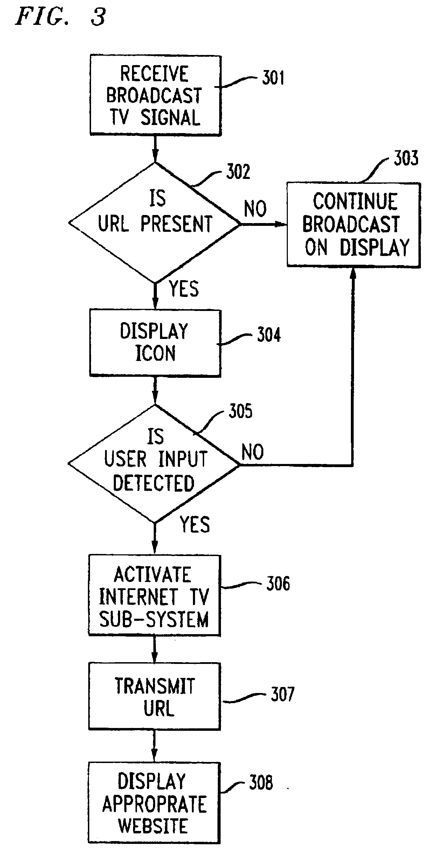

The process utilized in an Internet capable television arranged in accordance with the present invention is illustrated in the form of a flow diagram in Fig. 3. When the television is turned on, the television normally will receive conventional television signals, as illustrated in step 301. The television is arranged to monitor the received television signal for the presence of an embedded URL, in test step 302. If an embedded URL is not detected, a negative result occurs in step 302, and the process proceeds to step 303, in which the display 205 continues to display the conventional television programming.

If an embedded URL is detected, a positive result occurs in step 302, and the process proceeds to step 304, in which display 205 continues to depict conventional television programming, supplemented however with an icon or other indication visible by the viewer indicating that a URL is present. The process then proceeds to step 305, in which the system is arranged to monitor for a user provided input. This input may occur, for example, when a viewer depresses a button on a specially equipped remote control device, wireless or wired, causing a signal to be transmitted to the control circuitry within the Internet ready television. Alternatively, the viewer may signal the system by means of a control button on the television itself, by speaking into a suitable voice detection circuit, or by any other actuation means. As long as the result of the monitoring performed in step 305 is negative, indicating that there has been no user input, the process returns to step 303, so that the display continues. Note, therefore, that conventional television programming, with or without an icon, will continue.

When a user input is detected, a positive result occurs in step 305, and the process proceeds to step 306, in which the Internet appliance sub-system of the Internet capable television is activated. Then, in step 307, the URL captured by the television is transmitted from the television to the Internet host, causing the display, on display 205, of the Web page associated with that URL. The viewer, through access to the Internet site having the address specified by the URL, can then advantageously obtain information relevant to the television programming that is currently being displayed, or was being displayed, on display 205 during a preceding time interval.

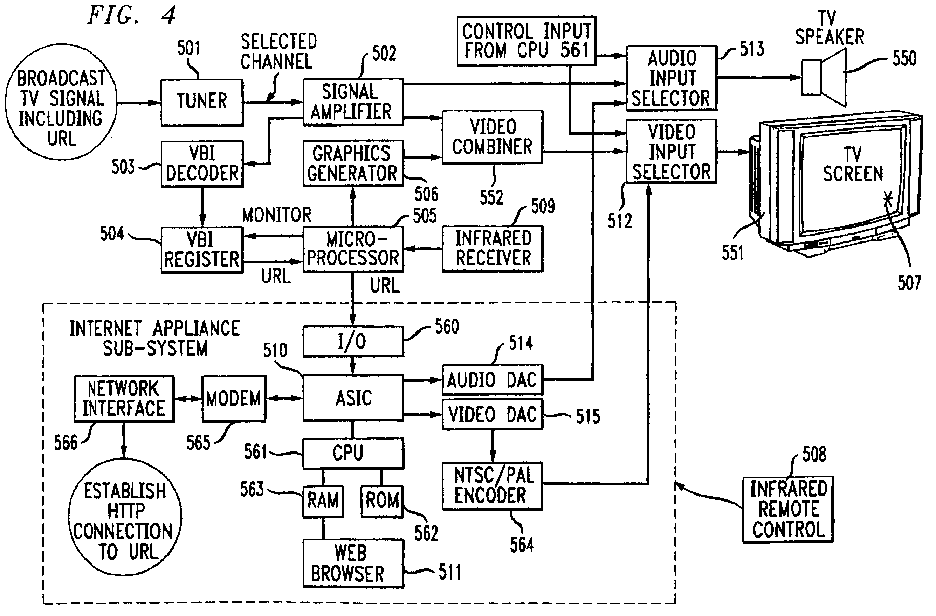

Referring now to Fig. 4, there is shown a diagram illustrating more of the details of the components contained in an Internet ready television arranged in accordance with the present invention. A tuner 501 is tuned to a desired TV broadcast channel and passes the selected signal to a signal amplifier 502. Signal amplifier 502 amplifies the selected signal and passes it via video combiner 552 and video input selector 512 to the TV screen 551. The output of amplifier 502 is also applied via audio input selector 513 to speaker 550. (The functions of selectors 512 and 513 is discussed below.) The output of amplifier 502 is also coupled to a vertical blanking interval (VBI) decoder 503, which is arranged to decode an appropriate portion of the received signal, illustratively Line 21 Field 2 Channel 5. If the received signal does contain a URL which is being broadcast with the TV signal, VBI decoder 503 passes the URL to a VBI register 504.

A microprocessor 505 is arranged to monitor the contents of VBI register 504. If the presence of a URL is detected, microprocessor 505 sends a message to a graphics generator 506 which produces a signal indicative of an overlay icon. This signal is applied through video combiner 552 and video input selector 512 to video display 551, causing an icon 507 to appear on the TV screen. This indicates to a viewer that there is a URL associated with the broadcast TV signal.

If the viewer wishes to connect to the Internet site associated with the URL, he or she may depress a special button on an infrared remote control 508, causing a message to be transmitted to an infrared receiver 509 and thence to microprocessor 505. Microprocessor 505 then passes the URL from VBI register 504 to the input/output (I/O) gateway 560 of the Internet appliance sub-system of the Internet ready television set. In particular, the output of microprocessor 505 is applied via I/O gateway 560 to an Application Specific Integrated Circuit(ASIC) 510. ASIC 510 is connected to the central processing unit (CPU) 561 of the Internet appliance sub-system, which together with read only memory (ROM) 562 and random access memory (RAM) 563 support computer-like functionality. In particular, when ASIC 510 passes a URL to CPU 561, this may be used to activate or launch a Web browser process 511. As part of this process, a network connection is established from ASIC 510 through modem 565 and network interface 566 to an Internet Web host. The URL is then transmitted to the host, causing, in conventional manner, the establishment of an HTTP connection to the site associated with the URL.

Microprocessor 505 then sends a message to video input selector 512 and audio input selector 513, causing the Internet ready TV to switch from the conventional television mode to an Internet display mode. In the latter mode, the Internet signals received from network interface 566 are supplied through modem 565 and ASIC 510 to a video DAC 514 and an audio DAC 515. The audio portion output from audio DAC 515 is applied to audio input selector 513 and thence to speaker 550, while the video portion output from video DAC 515 is applied to an NTSC/PAL encoder 564, and thence to video input selector 512. NTSC/PAL encoder is needed because progressively scanned video signal format must be converted into an interlaced video signal format so that it can be displayed on the interlaced TV screen (video display). In this manner, the viewer is enabled to view the Internet site associated with the programming containing the embedded URL.

It is to be noted here that the functionality of the present invention is ideally suited for use in conjunction with a television receiver equipped with a picture-in-picture (PIP) capability. With PIP, the conventional broadcast television content can remain on the screen while, at the same time, the Internet connection to the appropriate URL is established, and the information obtained from the remote Website is displayed in the secondary picture within the main picture. In a PIP arrangement, audio input selector 513 and video input selector 512 would be arranged to output applied signals to the appropriate portions of the display control circuitry that are associated with the PIP windows. Obviously, PIP capability can also be used to reverse the arrangement of the viewing area, such that the internet information is displayed in a larger area, and the conventional information is displayed in a smaller area.

The present invention allows for the dynamic linking of broadcast TV content and the Internet, and enables a wide range of easy-to-use, enhanced applications. For example, the present invention may be used in connection with interactive advertising, in order to connect to an advertiser's Web site to participate in a promotion or contest. It may also be used in connection with information access for the ordering of information regarding a product or service presented in broadcast TV programming. Yet other contemplated uses are with respect to home shopping, in connection with the ordering of a product or service while watching a broadcast TV home shopping program, and in connection with interactive game shows, so that a viewer can play along with a broadcast TV game show.

Various modifications and adaptations of the present invention will be apparent to persons skilled in the art. Accordingly, the present invention is to be limited only by the appended claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

**1.** A method of providing a television viewer access to an Internet site associated with programming displayed on an Internet capable television set, comprising the steps of
inserting a signal corresponding to a URL into a broadcast television signal,
indicating the presence of said inserted signal to said viewer,
detecting occurrences of a viewer generated input control signal during a time period when said URL is present, and
responsive to detection of said input control signal, displaying on said television for said viewer, the Internet site addressed by said URL.

**2.** The method of claim 1 wherein said inserting step includes inserting said URL in a specific field within the vertical blanking interval of said broadcast television signal.

**3.**

**4.** The method of claim 2 wherein said specific field is the field ordinarily reserved for closed captioning information

**5.** The method of claim 1 wherein different URL's are inserted in different portions of a single program or advertisement.

**6.** The method of claim 4 wherein each of said different URL's corresponds to a specific item being described in said television program.

**7.** The method of claim 1 wherein said indicating step includes displaying an icon on said television set.

**8.** The method of claim 1 wherein said input signal is generated in response to actuation by said viewer of a control disposed on a wireless (an infrared) remote control device, or wired remote control device, used to control said television set.

**9.** The method of claim 7 wherein said remote control device is arranged to transmit wireless infrared signals to said television.

**10.** The method of claim 7 wherein said detecting step includes detecting actuation of said remote control.

**11.** The method of claim 1 wherein the URL information contained in the television signal is extracted and sent to the portion of the television used to establish an Internet connection.

**12.** The method of claim 1 wherein the information embedded in said television signal is associated with the television programming.

**13.** A method of displaying information from a specific Internet site on an Internet capable television set, comprising the steps of
encoding information specifying a URL in a broadcast television signal,
transmitting said signal to said television set,
displaying an icon on said television set indicating the presence of said URL, and
responsive to an input control signal generated during a time period when said URL is present, transmitting a message from said television set to an Internet host requesting that information at the Internet site addressed by said URL be transmitted to said television set.

**14.** A method of accessing an Internet site associated with programming displayed on a television set, comprising the steps of
displaying on said television set, an indication that a URL has been inserted a broadcast television signal received by said television set,
detecting occurrences of an input control signal during a time period having a specified relationship to the time period when said URL is present, and
responsive to detection of said input control signal, causing the display on said television for said viewer, of the Internet site addressed by said URL.

**15.** A method of accessing a world wide web (WWW) page associated with programming displayed on an Internetcapable television set, comprising the steps of
displaying to a viewer on said television set, an icon indicating that the address of a WWW page has been recovered from the television signal received by the television set,
responsive to detection of an input control signal generated by said viewer, transmitting said address to a WWW host, and
displaying on said television the WWW page having said address.

**15.** A method of accessing a world wide web (WWW) page associated with programming displayed on an Internetcapable television set, comprising the steps of
recovering from a received television signal, the address of a WWW page, said address being encoded in the vertical blanking interval;
displaying an icon to a viewer on said television set, said icon indicating that said address has been recovered;
responsive to detection of an input signal generated by said viewer, transmitting said address from said television set to a WWW host,
receiving at said television set from said WWW host, a WWW page having said address, and
displaying said WWW page on said television.

**16.** A method of accessing a world wide web (WWW) page associated with programming displayed on an Internetcapable television set, said method comprising the steps of
encoding in the vertical blanking interval of a television signal, encoded information identifying the URL of an Internet website, said website containing information associated with the television image displayed when said television signal is processed in a television receiver and displayed on a display device;
responsive to receipt at said television set of said television signal including said encoded information, displaying an icon on said display device, said icon indicative of the presence of said URL in said vertical blanking interval;
monitoring for actuation of a viewer generated signal during a time interval during or shortly after said displaying step is performed;
responsive to receipt of said viewer generated signal, extracting said URL from said received television signal,
transmitting said URL to an Internet host;
receiving from said Internet host information for displaying a WWW page; and
using said received information to display said information on said display device.
